Europäisches Patentamt

European Patent Office

Office européen des brevets

(19)

(11) **EP 1 389 819 A1**

(12) **EUROPEAN PATENT APPLICATION**

(43) Date of publication:
**18.02.2004 Bulletin 2004/08**

(51) Int Cl.⁷: **H02J 3/00**, G06F 17/50

(21) Application number: **02405697.0**

(22) Date of filing: **14.08.2002**

| | |
|---|---|
| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI**<br><br>(71) Applicant: **ABB Technology AG**<br>**8050 Zürich (CH)**<br><br>(72) Inventors:<br>• **Westermann, Dirk**<br>  **CH-8050 Zürich (CH)**<br>• **Carvalho, Antonio**<br>  **Sao Paulo-SP CEP 01423-000 (BR)** | • **Rios, Paula**<br>  **Estrada dos Indios 1179, Aruja Sao Paulo (BR)**<br>• **Lacorte, Marta**<br>  **Sao Paulo-SP CEP 01423-000 (BR)**<br>• **Rahmani, Mohamed**<br>  **CH-8645 Jona (CH)**<br>• **Bosshart, Peter**<br>  **CH-5610 Wohlen (CH)**<br><br>(74) Representative: **ABB Patent Attorneys**<br>**c/o ABB Schweiz AG,**<br>**Intellectual Property (CH-LC/IP),**<br>**Brown Boveri Strasse 6**<br>**5400 Baden (CH)** |

(54) **Automatic creation of a design for a high or medium voltage power transmission network**

(57) A design for a high or medium voltage power transmission network is created automatically. The network comprises a plurality of subsystems that are classifiable as switchgear, transformers, transmission lines, or network controllers such as compensators, where each subsystem comprises a plurality of components, where components exist in different embodiments having different technical and economical characteristics, and where the design comprises, for each subsystem, a selection of components such that the subsystem satisfies given technical and financial criteria.

The following steps are performed:

a) inputting (21) a set of solution alternatives characterising the network,
b) determining (21) for each solution alternative at least one set of solution constraints for each subsystem,
c) automatically determining (24,25,26,27), for each subsystem and for each of the at least one sets of solution constraints, a cost-optimal subsystem (28) that satisfies the solution constraints, and determining (29) subsystem performance data that characterises the cost-optimal subsystem (28),
d) combining, for each solution alternative, the performance data of the corresponding cost-optimal subsystems and determining (23) performance data (13) of the solution alternative.

Fig. 2

**Description**

Field of the Invention

The invention relates to the field of computer aided design tools. It relates to a method, computer program and apparatus for automatically creating a design for a high or medium voltage power transmission network as described in the preamble of claims 1, 12 and 1 3.

Background of the Invention

Modifications or extensions of existing AC transmission systems require extensive and lengthy system studies by a manufacturer of AC system components and/or by the grid company. The result of such studies is an individual solution, which determines how to extend or modify the customer's transmission system to meet the technical and economical requirements. In order to perform those system studies and to develop an optimal solution with regard to technical and economical aspects it is necessary to have a lot of detailed knowledge about the complex technical process of generating and transmitting electric power.
Nowadays the owner of the transmission system has several qualified specialists who are able to solve partial problems concerning power transmission. All the planning is done by the transmission system owner. Conventional simulation programs, which model the power system in terms of system components in different granularities for tasks of power flow, stability, generation scheduling, protection, etc., are used to specify the desired solution. A detailed technical knowledge and special education is necessary to use these simulation programs. The results of all these studies specify in detail what the manufacturers have to deliver. Under these conditions, the process of finding an optimal solution for a specific task concerning electric power transmission, i.e. connecting new generators or consumers and/or building new transmission lines is time consuming and/or only sub-optimal solutions can be found.
Expert systems are a possibility to solve this problem and to reduce the complexity at least from the viewpoint of the user. Many expert systems exist. Most of them are dedicated to specific problems. Atanackovic D. et al., in "An Integrated Knowledge-Based Model for Power System Planning", IEEE Expert, IEEE Inc., New York, US, Vol. 12. No. 4. 1997-07-01, pp- 65-71 describe a system comprising several interacting expert systems for configuring a power system and its subsystems. The system is, however extremely complex and involves a huge development effort. What is needed is a design system related to the main functionalities of a power transmission system, having an efficient and flexible structure.

Description of the Invention

It is therefore an object of the invention to create a method, computer program and apparatus for automatically creating a design for a high or medium voltage power transmission network of the type mentioned initially, which overcomes the disadvantages mentioned above.
These objects are achieved by a method, computer program and apparatus for automatically creating a design for a high or medium voltage power transmission network according to the claims 1, 12 and 13.
The inventive method automatically creates a design for a high or medium voltage power transmission network, where the network comprises a plurality of subsystems that are classifiable as switchgear, transformers, transmission lines or network controllers, where each subsystem comprises a plurality of components, where components exist in different embodiments having different technical and economical characteristics, and where the design comprises, for each subsystem, a selection of components such that the subsystem satisfies given technical and financial criteria.
The method comprises the steps of

a) inputting a set of solution alternatives characterising the network,
b) determining for each solution alternative, at least one set of solution constraints for each subsystem,
c) automatically determining, for each subsystem and for each of the at least one sets of solution constraints, a cost-optimal subsystem that satisfies the solution constraints, and determining subsystem performance data that characterises the cost-optimal subsystem,
d) combining, for each solution alternative, the performance data of the corresponding cost-optimal subsystems and determining performance data of the solution alternative.

In this way, the invention allows to easily partition the design problem into a number of smaller tasks addressing each subsystem and then combining the results into a solution for the network.
In a preferred variant of the invention, an economic evaluation of each solution alternative is performed, and at least one of a net present value (NPV), internal rate of return (IRR) and life cycle cost (LCC) of the solution alternative is computed. This allows comparing the solution alternatives from an economic point of view.

In a further preferred variant of the invention, the step of performing an economic evaluation comprises a Monte Carlo Simulation. This allows to take uncertainties with regard to assumptions implicit in the economic evaluation into account.

The computer program for automatically creating a design for a high or medium voltage power transmission network according to the invention is loadable into an internal memory of a digital computer, and comprises computer program code means to make, when said computer program code means is loaded in the computer, the computer execute the method according to the invention. In a preferred embodiment of the invention, a computer program product comprises a computer readable medium, having the computer program code means recorded thereon.

The apparatus for automatically creating a design for a high or medium voltage power transmission network according to the invention comprises a data processor, a memory coupled to the processor and computer program code means stored in said memory, where said computer program code means, when executed by the processor, causes the method according to the invention to be executed.

Further preferred embodiments are evident from the dependent patent claims.

Brief Description of the Drawings

The subject matter of the invention will be explained in more detail in the following text with reference to preferred exemplary embodiments, which are illustrated in the attached drawings, in which:

Figure 1 schematically shows a design process and interfaces according to the invention;
Figure 2 shows a process structure for creating a design according to the invention;
Figure 3 shows a representation of a transmission line with compensation elements; and
Figure 4 shows properties of design alternatives determined by repeated application of the inventive method.

The reference symbols used in the drawings, and their meanings, are listed in summary form in the list of reference symbols. In principle, identical parts are provided with the same reference symbols in the figures.

Detailed Description of Preferred Embodiments

The method according to the invention implements a black-box approach, in which a high or medium voltage power network or power system is decomposed into well defined and well separated technical subsystems which are classifiable as, for example:

- *Switchgear* providing switching and protection functionality,
- *Transmission* for transmitting energy from one point to another,
- *Transformation* for converting voltage levels, magnitude and phase shifting, and
- *Network controllers* such as FACTS devices, including e.g. reactive power compensation devices for absorbing or generating reactive power.

Although these classes of subsystems appear quite different, they have common aspects, such as technical requirements, cost, reliability, maintenance cost etc. which can be viewed in the same way and are, according to the invention, encompassed by a common architecture. This architecture comprises a general model of a subsystem, the interface and the way in which the model is maintained and updated. The model delivers data used for typical investigations as required for basic design and tendering purposes. Here, cost comparison is an important issue, e.g. for economical-technical optimisation.

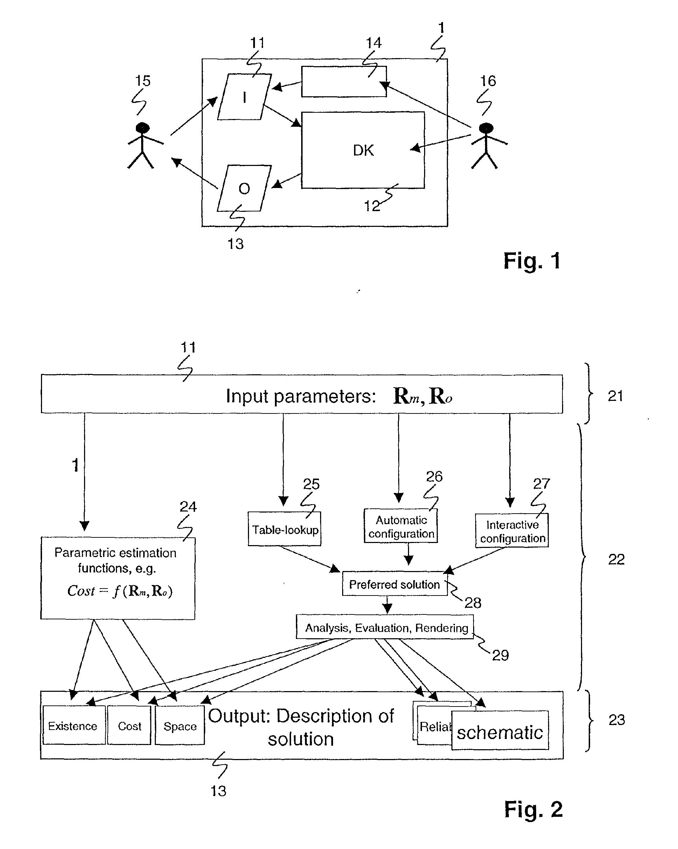

The above classes of subsystems or types of black boxes are described according to the following architecture shown in Figure 1: A black box 1 accepts input data 11 from and determines output data 13 for an expert or user 15. The input 11 specifies a set of requirements on the solution to be found. Then the black box 1 uses configuration or modelling knowledge or domain knowledge 12 to determine, from the input requirements 11, the output information 13 associated with a cost-optimal technical realization. The name "black box" stresses the capability to encapsulate all details related to the technical realization of a subsystem. The expert 15 does not need to understand domain knowledge details. It is sufficient to have a general knowledge on power systems and to know the interface of the black box 1, i.e. the input 11 and output 13 specifications. On the other side, a developer 16 provides, maintains and upgrades the black box 1 and in particular the core part, i.e. a representation of the domain knowledge 12. The developer 16 also specifies default values 14 for input values 11 that are optional. A black box 1 preferably comprises knowledge pertaining to different types of subsystem properties, e.g., specific cost functions, availability figures, technical design knowledge etc.

Each black box 1 accepts a number of input parameters 11. The types and the number of the input parameters 11 depend on the class of subsystem represented by the black box 1. Examples are: U (rated voltage), Power (MVA), Short circuit power, Number of system connections. In a preferred embodiment of the invention, the input 11 for each subsystem class comprises a nominal voltage, a nominal current, a nominal frequency, a load angle and a short circuit current. The input 11 implicitly or explicitly specifies a set of solution alternatives that characterise the network and constrains the solution by imposing certain limits or choices. In a preferred embodiment of the invention, two classes of input parameters 11 are distinguished:

1. Mandatory parameters: For these parameters, a value *must* be provided in order to allow the black box 1 to search for a technical solution.

2. Optional parameters: If no value for an optimal parameter is provided, the black box 1 returns a technical realization with the lowest investment cost that fulfils the mandatory parameters. An optional parameter however allows the user to directly make technical decisions by constraining the solution according to the parameter specified. For example, a voltage level, substation configuration, types of tower, a number of conductors in bundles, insulation technology, AC or DC transmission etc. may be optionally specified, if they are not already mandatory. Most optional parameters have discrete values. Depending on the number of optional parameters that are constrained by the user, a rather traditional way of design (when all optional parameters defined) or a rather functional-oriented way (when no optional parameters set) shall result.

The output 13 of a black box 1 corresponds to the cheapest solution found by the black box 1, i.e. to a cost-optimal subsystem. This cost-optimal subsystem is described by a selection of components for the subsystem that satisfies the input requirements 11 or solution constraints, and is further characterised by the output variables 13 that describe subsystem performance, especially with regard to economical considerations. An important issue in this process is life cycle cost evaluation, which is supported by different cost items of the black boxes 1. To be independent of the actual life cycle calculation model, these cost items are separate output items. This allows great flexibility in aggregating life cycle cost models outside of the black box.

Regardless of the actual implementation and class of subsystem, in a preferred embodiment of the invention, the following output items or variables are returned in order to support the design method.

1. Existence of a feasible solution ( yes, no ).

If there is a feasible solution satisfying the input constraints, then the following output variables are provided, of which the investment cost is always provided and the remaining variables are optional:

2. Investment cost in KUSD or other currency,

3. Space in $m^2$ and/or footprint of the technical realization,

4. Reliability numbers of the main function(s), e.g. mean time to fail, mean time to repair,

5. Risk information e.g. cost, delivery time, compliance with functionality,

6. Efficiency, e.g. specific copper and iron losses,

7. Maintenance cost in KUSD,

8. Schematic or description of solution, e.g. diagram and/or model for simulation purposes, system studies, e.g. for load flow, short circuit, stability analysis etc.

9. Application hints, e.g. "this solution may only be chosen if the neighbouring elements has sufficient impedance".

10. Characteristic technical parameters of the solution, e.g. line parameters (Zw, γ)

11. Configuration model of subsystems. Obviously, this information is omitted if the supplier takes responsibility for the black box contents and wants to keep it secret.

12. Contact person, e.g. the developer, hot-line phone number.

In a preferred embodiment of the invention, for each output variable, an associated tolerance is determined as well. The tolerance typically is in the range of +/- 10..20%. The tolerance is useful when ranking different solution alternatives. The tolerance is determined by e.g. Monte Carlo Simulation in the following fashion: uncertain information that is implicit in the calculations leading to the output variables 13 is varied randomly within predetermined bounds, and the output variables 13 are repeatedly calculated for each random variation. After a large number of such repeated calculations, a probability distribution of each output variable 13 is obtained. The corresponding tolerance then e.g. gives the size of an interval in which 95% of the values of the output variable lie. The uncertain information being varied describes e.g. future energy prices and contract conditions, fuel prices, climatic conditions affecting transmission, subsystem availability, risks in component delivery with resulting monetary losses due to late commissioning and/or power not delivered, etc...

Figure 2 shows a exemplary process structure for creating a design according to the invention. The following steps are preferably performed to generate and evaluate solution alternatives:

- Different sets of input parameters, each set defining a solution alternative, are determined 21, e.g. by interaction with a user or by reading them from computer storage. For example, a solution alternative is specified by a voltage level.
- Solution constraints for each subsystem are determined, e.g. a type of technology or construction that is determined by the voltage level. This either is done automatically from the input parameters in 21, or is done interactively by each subsystem optimisation process in 22.
- In a plurality of subsystem optimisation processes, for each subsystem, the cost-optimal subsystem and its characteristics are determined 22, based on electric and subsystem-specific economic requirements and on the solution constraints.
- The complete network or system description, for each solution alternative, is combined from the cost-optimal subsystems 23. This description characterises the respective solution alternative in terms of the components used in the cost-optimal subsystems, and in terms of technical and economical performance data. This step 23 comprises the addition of costs and the tabulating total costs and pertinent parameters of the various alternative solutions in order to allow a comparison of solution by the user.
- Preferably, a further step is performed, in which the economical and technical overall performance of the complete network is evaluated, e.g. by simulating network operation, or by Monte Carlo Simulation with varying circumstances.

In step 22, the essential function of each black box 1, i.e. the search for the cheapest realization for given requirements, is executed. In a preferred embodiment of the invention, at least one of the following four approaches to implementing this function is implemented. Which approach is implemented depends on the kind of subsystem modelled by the black box 1, the availability of empirical or theoretical data, and the modelling effort that is possible. According to the invention, the input/output interface to each black box 1 or optimising function is independent of the actual operation of the black box 1 and its internal domain knowledge representation. The black box operation may be refined or completely changed without affecting the overall design process. The four approaches shown are exemplary; other approaches are conceivable whose integration into the overall system according to Figure 2 also falls under the scope of the invention. The four approaches shown are:

1. Parametric estimation functions: Based on historical cases and/or physical and technical relation knowledge in terms of input parameters estimation, parametric estimation formulas 24 are identified that describe characteristics of a solution, such as cost, space, or existence of a technical solution. Only a functional relationship in terms of a mathematical expression is available, but not an explicit model specifying e.g. characteristics and numbers of components. Therefore, not all output variables characterising a particular solution can be extracted in all cases, unless e.g. a corresponding function is known. However, sensitivity analysis and identification of major cost drivers are easy to perform. For an example, see the transformer black box model below.

2. Solution based: The following three approaches are based on the generation of correct solutions, i.e. of solutions that fulfil the input requirements. From this set the cost-optimal solution 28 is selected. From this solution, values for the output variables are determined 29.

    a) Table-lookup: Based on historical case data, or from technical/physical considerations, each of a variety of cases is assigned to discrete values of the input parameters, and a database or just a table containing inputs and corresponding cases is established. A key for accessing the database is assembled from the values of the input parameters, and the database 25 returns a fitting output case.
    Example: For a switchgear there may be two requirements: 1. rated voltage, with the values 170, 245 and 420 kV; and 2. the maximum breaking current with the values 40, 50 and 63 kA. Consequently, a matrix of nine values would cover all possible requirements. For each element of the matrix, a solution will be assigned. Let m be the number of mandatory and o the number of optional parameters. Generally, with (m+o) input parameters with $k_i$ different values, the table lookup has

$$\prod_{i=1}^{m+o} k_i$$

    entries.
    b) Automatic configuration: This approach is based on a description of possible configurations, such as a configuration model. Such a model allows to automatically configure a family of pre-engineered components to meet a pre-defined set of requirements $(R_m, R_o)$.

In a preferred variant of the invention, this step 26 of automatically determining, for a subsystem and for a set of solution constraints, the cost-optimal subsystem is effected by an expert system, as described e.g. in the above-cited paper by Atanackovic et al.

In another preferred variant of the invention, said step 26 is effected by an automatic generation of possible component configurations that are described by a configuration model and by selecting the cost-optimal subsystem from these possible configurations, as described e.g. in copending European patent application No. 1113879.9, filed 2001-06-07.

c) Interactive configuration: A human expert may be involved 27 in the selection of the cheapest solution.

In a preferred embodiment of the invention, the approaches 24,25,26,27 for determining the cost-optimal subsystem 28 depend on the type of subsystem. For example, a substation may be optimised by an expert system 26, while a transformer is optimised from historical data contained in a look-up table 25.

In a preferred embodiment of the invention, costs of a particular subsystem configuration, i.e. of a selection of specific components making up the configuration are computed in step 29 from actual product prices. However, this approach requires a large amount of information to be obtained and kept up to date. Therefore, in another preferred embodiment of the invention, a less detailed but more manageable cost model is established. Such a cost model is specific to each class of subsystems. For example, a substation cost model expresses costs of the cost-optimal substation, whose configuration is determined by an automatic configuration procedure, according to the technical constraints. Costs comprise on initial investment, maintenance and losses during network operation and involve a trade-off: a larger investment in conductor capacity and technology reduces losses during operation-depending on future energy prices and on the business model and contracts implemented. The different costs are aggregated according to standard financial procedures and expressed e.g. as at least one of a net present value (NPV), internal rate of return (IRR) and life cycle cost (LCC) of the solution alternative

Risks and uncertainties with regard to economic performance are assessed by incorporating random changes and contingencies, having given statistical characteristics, and performing repeated simulations of the network behaviour over time. As a result, probability distributions, expected values and confidence intervals for costs, i.e. NPV, IRR and/or LCC of the complete power network are computed.

There follow examples for black box implementations for the different classes of subsystems, i.e. switchgear or substations, transformers, transmission lines or compensators

A substation black box representation comprises, in a preferred embodiment of the invention a configuration model as described in the abovementioned copending European patent application No. 1113879.9.

Mandatory input parameters are :

- U: the rated voltage. Only a predetermined set of rated voltages (13.8, 34.5, 69, 138, 230, 345, 500 and 750kV) is considered.
- nEL: the number of in- or outgoing lines
- nCT : the number of in- or outgoing transformer feeders

Optional input parameters are:

- a substation arrangement, having 5 possible values, i.e:

  - single bus bar (SBB)
  - single bus bar with transfer bus (SBB+T)
  - double busbar (DBB)
  - ring
  - and one-and-a half breaker (1 1/2)

- nib: the number of bus couplers

In addition to the configuration model, the following cost model is applicable by the automatic configuration 26 or in step 29: The cost of the substation must be determined during the automatic configuration and for the resulting cost-optimal substation. It is preferably determined by a cost model comprising, in a preferred embodiment of the invention, an empirically determined function

$$C = C_{switchgear} (U, n_{EL} + n_{CT}, arr) + n_{EL} \cdot C_{ELbay} (U, arr)$$

$$+ n_{CT} \cdot C_{CTbay} \, (U, arr)$$

$$+ n_{ib} \cdot C_{IB} \, (U, arr)$$

that depends on a rated voltage U, a number of in- or outgoing lines $n_{EL}$, a number of transformer feeders $n_{CT}$, a number of bus couplers $n_{ib}$, the arrangement *arr of* the cost-optimal substation. The functions $C_{ELbay}$, $C_{CTbay}$ and $C_{IB}$ are obtained from tables containing average material and erection costs for the respective components (line and transformer bays, bus couplers, etc.), as a function of voltage levels and arrangements. $C_{switchgear}$ includes costs for all direct cost items for the whole substation, such as the land, preparation of terrain/soil, drainage, fences, grass, pavement, roads, illumination, fire protection, water supply, sewage system, earthing system, cable trenches, access road/tracks, buildings, cooling and air conditioning system, communication system, compressed air system, construction/erection facilities. These average costs are obtained from historical data of known installations and usually are specific for a given country. The total direct cost *C* is multiplied by a predetermined factor in order to account for associated engineering, administration and unforeseen expenses.

A transformer black box representation comprises, in a preferred embodiment of the invention, a parametric estimation function. This function computes, from values of the mandatory and optional input parameters, a cost of the transformer.

Mandatory input parameters are:

- S: the rated apparent power
- Umax: the rated voltage on the higher voltage side
- tap changer (with/without)
- number of windings

Optional input parameters are:

- Type of cooling (default is air forced/natural and oil natural)
- Number of phases per transformer unit (default is three phases)

The parametric estimation function used in the inventive method is determined in advance, from historical data and for a specific market or product line. This is done manually and/or with standard identification and curve-fitting techniques.

A transmission line black box representation comprises, in a preferred embodiment of the invention, a set of program procedures that implements a predetermined selection algorithm for computing line characteristics, including cost.

Mandatory input parameters are:

- rated voltage, total power, power factor, line length, AC frequency, energy cost, load factor, line lifetime and interest rate.

Optional input parameters are (default values are shown in brackets):

- number of circuits (1), line configuration (1 single circuit), tower type (guyed), creepage distance (20mm/kV), insulator (Cap & Pin Normal), percentage of angle towers (30%), number of optical ground wires (none), conductor tape (ACSR), conductor specified and number of conductors per bundle.

The conductor specified and the number of conductors per bundle is preferably left to be determined by the optimisation. Since there are a large number of optional parameters, the design process may be effected in different ways, depending on circumstances. In a preferred embodiment of the invention, default values 14 are assumed for optional parameters that are not specified by the user. In another preferred embodiment of the invention, the unspecified parameters are iteratively modified by an automatic optimisation procedure in order to find a lowest cost solution.

From the mandatory and optional parameters, in a first step, further technical parameters of the line are computed, such as number of towers, average span, number of angle/suspension towers, number of tension insulators, number of suspension insulators etc, as well as electrical characteristics of the line, such as resistance, capacitance, inductance. In a second step, from these technical parameters, installation costs and operational losses over the lifetime of the line are computed and expressed e.g. as total costs in terms of NPV, IRR or LCC. Total costs are optimised as a function of conductor cross-section and number of conductor per phase. Further details and line design rules are applicable, as given e.g. in the following publications:

- IEC 826 - Loading and strength of overhead transmission lines" - 1991.
- Review of IEC 826 - Improved design criteria of overhead transmission lines based on reliability concept - chapter IV CIGRE-WG 22.06 - Dec 1996.
- Probabilistic Design of overhead Transmission Lines - CIGRÉ-WG 22.06-February 2001.
- IEC 71- Part 1 - Insulation co-ordination Part 1: Definitions, principles and rules 1993.
- IEC 71 - Part 2 - Insulation co-ordination Part 2: Application guide 1996.

A compensator black box representation comprises, in a preferred embodiment of the invention, a set of program procedures that implements a predetermined selection algorithm for computing line characteristics, including cost.

Mandatory inputs are:

- Rated frequency, $f$ (Hz)
- Rated voltage, $U_{rated}$ (kV)
- Rated current, $I_{rated}$ (kA)
- Maximum allowed voltage angle, $\delta_{max}$ (degree)
- Line parameters:

  - Line resistance, $R$ ($\Omega$/km)
  - Line inductive impedance, $X_L$ ($\Omega$/km)
  - Line capacitive impedance, $X_C$ $\Omega$.km)

- Voltage magnitude at sending-end, $U_s$ (kV)
- Voltage angle at sending-end fixed equal zero, $\delta_s = 0$
- Transmitted power, $P_r$
- Power factor at receiving-end, $\cos(\phi_r)$

Optional inputs are:

- Maximum allowed voltage, default value $U_{max} = 1.2$ p.u.
- Minimum allowed voltage, default value $U_{min} = 0.75$ p.u.
- Maximum allowed voltage angle, default value $\delta_{max} = 25$ degrees
- Series compensation minimum factor, $CFC_{min} = 0$ %
- Sending-end voltage at load rejection, $U_{s0}$ (kV) = 1.1

The outputs are:

- series compensation factor in percent, the associated MVAr and costs
- shunt compensation factor, in percent, the associated MVAr and costs
- receiving-end voltage (magnitude and angle), $U_r$, $\delta_r$
- sending-end active and reactive power, $P_s$, $Q_s$
- sending-end power factor, $\cos(\phi_s)$

Additional outputs are e.g. voltages along the line, with and without compensation, and under different load conditions, as well as active and reactive power and power factor at both ends of a line. The additional output serves e.g. to verify the operation of the compensator.

In a preferred embodiment of the invention, the compensation black box obtains the optimal shunt and series compensation (shunt reactor and series capacitor respectively). Optimality is defined with respect to cost and/or power factor. The optimisation is accomplished through a mathematical model of the electrical characteristics of the line and compensation elements. An associated cost model determines the cost of the compensation elements from their electrical characteristics or design parameters, e.g. as in the cost model examples shown for other subsystems. As the design parameters of the compensation elements vary, the electrical behaviour of the line varies, as does the cost of the compensation elements. An optimal solution that satisfies mandatory and optional inputs, in particular maximum and minimum allowed values, is found e.g. with standard optimisation algorithms.

The following section summarises a preferred modelling approach for the electrical characteristics of the line and compensation elements: A suitably exact line model of a transmission line considers the line parameters as uniformly distributed. Therefore, the voltage along the line is not constant. The voltage along the line decreases with the current flowing and increases if there is no current flowing. The voltage at the sending end and along the line must be kept below the maximum value allowed. In the case of a load rejection or with the receiving end being open, the line is without load and no current flows. The voltage at receiving end may increase beyond the allowed maximum voltage, depending on the line length. A usual procedure to reduce the voltage at the sending end is to install shunt reactors at both ends of the line.

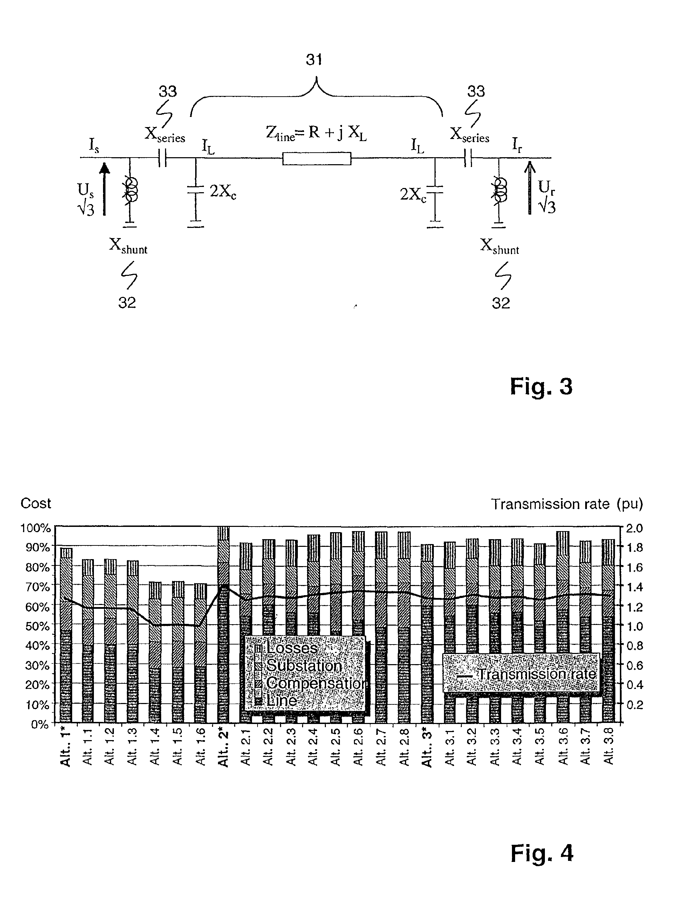

A transmission line has a limited capability to transmit active power. A usual procedure is to install capacitance in series to compensate the series impedance of the line, increasing in this way the line transmission capability. Figure 3 shows a resulting lumped parameter representation 31 of a transmission line with shunt reactors 32 and series compensators 33.

The compensation black box finds the best choice of series 33 and shunt 32 compensation for a given transmission line under defined system conditions and constraints.

Shunt compensation is accomplished by a reactance 32 installed in parallel to the line. For lines lengths around 300 km a shunt reactor 32 at both ends of the line is enough to keep the voltage below the allowed maximum voltage. The compensation black box represents shunt compensation by shunt reactors 32 having identical values installed at each end of the line, as shown in figure 3. Longer lines should be sectioned and have shunt reactors 32 installed along the line. The compensation black box is able to suggest compensation for lines without sections. If a line is too long, in a preferred embodiment of the invention, the line is split into separate sections. Each section of the line is then handled as a line.

Series compensation is accomplished by capacitor banks 33 installed in series with the transmission line. The location along the line of the series compensation is irrelevant to the end-effect, thus in the compensation black box the series compensation 33 is represented by two capacitances with same value installed at both end of the line, as shown in figure 3

The transmission line and the compensations are regarded as a *two-port network* and are represented by means of the *generalized circuit constant (ABCD)* model. This model is a mathematic expression, which relates voltage and current at the receiving end of a transmission system to the sending end voltage and current as shown in the following equations. For the representation of complex numbers, the notation $\underline{A}$ is used, while for phasor the notation $\vec{U}$ is used:

$$\vec{U}_s = \underline{A} \cdot \vec{U}_R + \underline{B} \cdot \vec{I}_R$$

$$\vec{I}_s = \underline{C} \cdot \vec{U}_R + \underline{D} \cdot \vec{I}_R$$

where:

$\vec{U}_s$ is the voltage at the sending end,
$\vec{U}_r$ is the voltage at the receiving end,
$\vec{I}_s$ is the current at the sending end, and
$\vec{I}_R$ is the current at the receiving end.

The following example illustrates the design of a long distance point-to-point transmission. This is a typical example of system level conceptual design. No system planning simulation has been performed before and the main task consists in determining technically feasible and economically optimized alternatives fulfilling the functional requirements. Possible line routing is already defined. Functional requirements are:

- point-to-point transmission, 800 km, to feed low cost energy to an existing 500 kV network, 60 Hz
- rated transmission capability = 2500 MW
- energy cost $20/MWh, load factor = 0.7
- hurdle rate = 14%, project life time = 30 years
- maximum voltage angle difference between sending and receiving ends = 15° (steady state stability requirement)
- load power factor (cos$\phi$) at receiving end= 0.99
- reactive flow through the line shall be minimized
- operation voltage limits according to [9]
- business target: minimize transmission rate ($/MW) for a risk lower than 10% of IRR being below the hurdle rate

Three main alternatives were considered:

750 kV, two single circuits (2SC 750kV)
500 kV, three single circuits (3SC 500kV)
500 kV, single+double circuit (1SC+1DC 500kV)

| | alter-native | condoctor type | tower type | circuit type | cond. per bundle | shunt | | series | |
|---|---|---|---|---|---|---|---|---|---|
| | | | | | | % | MVAr | % | MVAr |
| **2 SC 750 kV** | **1\*** | **BLUE JAY** | self suport conven-tional | **single** | 4 | 90 | 2392 | 50 | 1090 |
| | 1.1 | PELICAN | | single | 4 | 90 | 2050 | 60 | 1068 |
| | 1.2 | CHICKADEE | | single | 5 | 95 | 2364 | 55 | 894 |
| | 1.3 | MERLIN | | single | 6 | 100 | 2495 | 45 | 645 |
| | 1.4 | PELICAN | guyed | single | 4 | 90 | 1993 | 60 | 1098 |
| | 1.5 | CHICKADEE | | single | 5 | 95 | 2293 | 55 | 922 |
| | 1.6 | MERLIN | | single | 6 | 95 | 2299 | 50 | 742 |
| **3SC 500 kV** | **2\*** | **BLUE JAY** | self suport compact | **single** | 4 | 90 | 1132 | 50 | 600 |
| | 2.1 | COOT | | single | 3 | 65 | 776 | 75 | 839 |
| | 2.2 | COOT | | single | 4 | 70 | 975 | 70 | 669 |
| | 2.3 | PELICAN | | single | 5 | 75 | 1158 | 65 | 559 |
| | 2.4 | CHICKADEE | | single | 6 | 75 | 1165 | 60 | 874 |
| | 2.5 | COOT | self suport conven-tional | single | 3 | 60 | 1240 | 80 | 2062 |
| | 2.6 | COOT | | single | 4 | 65 | 1534 | 75 | 1688 |
| | 2.7 | PELICAN | | single | 5 | 70 | 1801 | 75 | 1545 |
| | 2.8 | CHICKADEE | | single | 6 | 70 | 1810 | 70 | 1258 |
| **1SC+1DC 500 kV \*\*** | **3\*** | **RAIL** | DC: self suport conven-tional SC: as for alternativ es 2 to 2.8, respecti-vely | **double** | 4 | 90 | 1132 | 50 | 600 |
| | 3.1 | COOT | | double | 3 | 60 | 629 | 80 | 1016 |
| | 3.2 | COOT | | double | 4 | 65 | 780 | 75 | 830 |
| | 3.3 | PELICAN | | double | 5 | 70 | 917 | 75 | 759 |
| | 3.4 | CHICKADEE | | double | 6 | 70 | 922 | 70 | 616 |
| | 3.1 | COOT | | double | 3 | 60 | 629 | 80 | 1016 |
| | 3.2 | COOT | | double | 4 | 65 | 780 | 75 | 830 |
| | 3.3 | PELICAN | | double | 5 | 70 | 917 | 75 | 759 |
| | 3.4 | CHICKADEE | | double | 6 | 70 | 922 | 70 | 616 |

\* alternatives proposed by conventional method

\*\* line and compensation referring to the double-circuit line;
single-circuit line taken as for alternatives 2 to 2.8, respectively

The table shows the alternatives generated by conventional and proposed processes, where technical characteristics for the line and compensation are presented. Due to the long transmission distance an intermediary substation is required to maintain voltage profile and reactive power flow under control. All substations have busbar arrangement type 1½ breaker and air-insulated technology.

For each alternative, the total investment cost and a deterministic cash flow analysis are performed in order to calculate the transmission rate (cost / MW) that is necessary to achieve an IRR of the project of 14% after tax.

Results are shown in Figure 4. Conventional solutions are denoted with an asterisk (*). Costs are given with respect to the highest total cost (alternative 2). The transmission rate is given with respect to the lowest transmission rate (alternative 1.6). The transformers and respective substation bays for the 500 kV interconnection at the receiving end are incorporated in the investment cost evaluation for the 750 kV alternative.

The risk analysis for the best performers is carried out taking into account the following aspects:

- uncertainty of investment costs (+/- 2% modelled by triangular distribution)
- uncertainty of O&M costs (+0% / -2% modelled by rectangular distribution)
- costs of unavailability = 100 * transmission rate
- stochastic outage frequency modelled by Poisson distribution and outage duration (stochastic & scheduled) modelled by exponential distribution.

The best solution according to the defined criteria is alternative 1.6. The corresponding transmission rate is only 75% of the best performer among the conventionally design solutions (alternative 1).

Further details on this model and on the computation of electrical characteristics of the transmission line with compensation elements can be derived from the standard textbooks

- Steveson W.; Elements of Power System Analysis; McGraw-Hill, and
- Grainger J., Steveson W.; Power System Analysis; McGraw-Hill

Further details on the entire method according to the invention, are found in the publication *"Optimisation of solution creation process for transmission projects",* A. Carvalho et al., CIGRE 2002, August 24-30, Paris, which is hereby incorporated in its entirety by reference.

List of designations

| | |
|---|---|
| 1 | black box |
| 11 | input data |
| 12 | domain knowledge |
| 1 3 | output data |
| 14 | default values |
| 15 | expert, user |
| 16 | developer |
| 21 | determining of input parameters |
| 22 | determining cost-optimal subsystems |
| 23 | combining of information from cost-optimal subsystems |
| 24 | parametric estimation function |
| 25 | table lookup |
| 26 | automatic configuration |
| 27 | interactive configuration |
| 28 | preferred solution |
| 29 | analysis, evaluation, rendering |
| 31 | lumped parameter representation of a transmission line |
| 32 | shunt reactor |
| 33 | series compensator |

**Claims**

**1.** Method for automatically creating a design for a high or medium voltage power transmission network, the network comprising a plurality of subsystems that are classifiable as switchgear, transformers, transmission lines or network controllers,
where each subsystem comprises a plurality of components,
where components exist in different embodiments having different technical and economical characteristics, and
where the design comprises, for each subsystem, a selection of components such that the subsystem satisfies given technical and financial criteria,

**characterized in that** the method comprises the steps of

a) inputting (21) a set of solution alternatives **characterising** the network,
b) determining (21) for each solution alternative at least one set of solution constraints for each subsystem,
c) automatically determining (24,25,26,27), for each subsystem and for each of the at least one sets of solution constraints, a cost-optimal subsystem (28) that satisfies the solution constraints, and determining (29) subsystem performance data that characterises the cost-optimal subsystem (28),
d) combining, for each solution alternative, the performance data of the corresponding cost-optimal subsystems and determining (23) performance data (13) of the solution alternative.

2. Method according to claim 1, comprising the step (29) of performing an economic evaluation of each solution alternative and computing at least one of a net present value (NPV), internal rate of return (IRR) and life cycle cost (LCC) of the solution alternative.

3. Method according to claim 2, where the step (29) of performing an economic evaluation comprises a Monte Carlo Simulation.

4. Method according to claim 3, where a probability distribution of at least one of NPV, IRR and LCC is computed.

5. Method according to one of the preceding claims, where the solution constraints for each subsystem comprise a nominal voltage, a nominal current, a nominal frequency, a load angle and a short circuit current.

6. Method according to one of the preceding claims, where the performance data (13) comprises

 • Existence of a feasible solution, and, only if there is a feasible solution:
 • Investment cost in KUSD or other currency;
 • Space in $m^2$ and/or footprint of the technical realization;
 • Reliability numbers of the main function(s);
 • Risk information;
 • Efficiency;
 • Maintenance cost in KUSD; and
 • Characteristic technical parameters of the solution.

7. Method according to one of claims 1 to 6, where the step of automatically determining, for a subsystem and for a set of solution constraints, the cost-optimal subsystem (28), is effected by minimising (24) a parametric function that expresses subsystem cost in terms of subsystem design parameters.

8. Method according to one of claims 1 to 6, where the step of automatically determining, for a subsystem and for a set of solution constraints, the cost-optimal subsystem (28), is effected by selecting the cost-optimal subsystem from a predetermined list (25) of possible configurations.

9. Method according to one of claims 1 to 6, where the step of automatically determining, for a subsystem and for a set of solution constraints, the cost-optimal subsystem (28), is effected by an expert system (26).

10. Method according to one of claims 1 to 6, where the step of automatically determining, for a subsystem and for a set of solution constraints, the cost-optimal subsystem (28), is effected by an automatic generation of possible component configurations (26) that are described by a configuration model and by selecting the cost-optimal subsystem from these possible configurations.

11. Method according to one of claims 1 to 6, where the step of automatically determining, for a subsystem and for a set of solution constraints, the cost-optimal subsystem (28), is effected by executing a predetermined selection algorithm (26).

12. Computer program automatically creating a design for a high or medium voltage power transmission network, which is loadable and executable on a data processing unit and which computer program, when being executed, performs the steps according to one of the preceding claims.

13. Apparatus for automatically creating a design for a high or medium voltage power transmission network, comprising a data processor, a memory coupled to the processor and computer program code means stored in said memory, where said computer program code means, when executed by the processor, performs the steps according to one of claims 1 to 11.

**Fig. 1**

Input parameters: $\mathbf{R}_m, \mathbf{R}_o$

Parametric estimation
functions, e.g.

$Cost = f(\mathbf{R}_m, \mathbf{R}_o)$

Table-lookup

Automatic
configuration

Interactive
configuration

Preferred solution

Analysis, Evaluation, Rendering

Existence | Cost | Space | Output: Description of
solution | Relia | schematic

**Fig. 2**

$$Z_{line} = R + j\,X_L$$

**Fig. 3**

Cost

Transmission rate (pu)

Losses
Substation
Compensation
Line

Transmission rate

Alt.. 1* | Alt. 1.1 | Alt. 1.2 | Alt. 1.3 | Alt. 1.4 | Alt. 1.5 | Alt. 1.6 | Alt.. 2* | Alt. 2.1 | Alt. 2.2 | Alt. 2.3 | Alt. 2.4 | Alt. 2.5 | Alt. 2.6 | Alt. 2.7 | Alt. 2.8 | Alt.. 3* | Alt. 3.1 | Alt. 3.2 | Alt. 3.3 | Alt. 3.4 | Alt. 3.5 | Alt. 3.6 | Alt. 3.7 | Alt. 3.8

**Fig. 4**

**European Patent Office**

## EUROPEAN SEARCH REPORT

Application Number

EP 02 40 5697

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | SENSARMA P S ET AL: "A comprehensive method for optimal expansion planning using particle swarm optimization" 2002 IEEE POWER ENGINEERING SOCIETY. WINTER MEETING. CONFERENCE PROCEEDINGS. NEW YORK, NY, JAN. 27 – 31, 2002, IEEE POWER ENGINEERING SOCIETY, NEW YORK, NY: IEEE, US, vol. 2 OF 2, 27 January 2002 (2002-01-27), pages 1317-1322, XP010578509 ISBN: 0-7803-7322-7 | 1 | H02J3/00 G06F17/50 |
| A | * page 1317, column 2, line 30 – page 1318, column 1, line 45 * | 2-13 | |
| Y | BINATO S ET AL: "A new Benders decomposition approach to solve power transmission network design problems" IEEE TRANSACTIONS ON POWER SYSTEMS, MAY 2001, IEEE, USA, vol. 16, no. 2, May 2001 (2001-05), pages 235-240, XP010549255 ISSN: 0885-8950 | 1 | |
| A | * page 235, column 1 – column 2, line 32 * | 2-13 | TECHNICAL FIELDS SEARCHED (Int.Cl.7) G06F H02J |
| A | CHRISTIANSEN U ET AL: "The Oscar-Project of ABB-the way in the right direction?" ELEKTRIZITAETSWIRTSCHAFT, 6 MARCH 2000, VDEW, GERMANY, vol. 99, no. 6, pages 70-78, XP008012587 ISSN: 0013-5496 * the whole document * | 1-13 | |
| A | EP 1 100 007 A (GEN ELECTRIC) 16 May 2001 (2001-05-16) * page 2, column 2, line 31 – page 3, column 3, line 33 * | 1 | |

The present search report has been drawn up for all claims

| Place of search | Date of completion of the search | Examiner |
|---|---|---|
| THE HAGUE | 12 February 2003 | Guingale, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

**EP 1 389 819 A1**

## ANNEX TO THE EUROPEAN SEARCH REPORT
## ON EUROPEAN PATENT APPLICATION NO.

EP 02 40 5697

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2003

| Patent document cited in search report | | Publication date | Patent family member(s) | | Publication date |
|---|---|---|---|---|---|
| EP 1100007 | A | 16-05-2001 | EP | 1100007 A2 | 16-05-2001 |

EPO FORM P0459

For more details about this annex : see Official Journal of the European Patent Office, No. 12/82

17